# EUROPEAN PATENT APPLICATION

(11) **EP 4 456 009 A2**
(43) Date of publication of application: **30.10.2024**
(21) Application number: 24199789.9
(22) Date of filing: 11.09.2024
(51) Int. Cl.: G06V 10/74, G06V 10/764, G06V 10/82, G06V 10/86, G06V 20/62

(54) **METHOD AND APPARATUS FOR DETERMINING SIGN MEANING, ELECTRONIC DEVICE, STORAGE MEDIUM AND COMPUTER PROGRAM PRODUCT**

(30) Priority: 13.05.2024 CN 202410592405
(71) Applicant: Beijing Baidu Netcom Science Technology Co., Ltd., Beijing 100085 (CN)
(72) Inventor: LAI, Shifan, Beijing, 100085 (CN); HUANG, Fengxiang, Beijing, 100085 (CN); CHEN, Yuxian, Beijing, 100085 (CN); KE, Jia, Beijing, 100085 (CN); LEI, Siyue, Beijing, 100085 (CN); PEI, Meiqi, Beijing, 100085 (CN); LIU, Wanzhen, Beijing, 100085 (CN); LIU, Chaofan, Beijing, 100085 (CN); CUI, Shaokang, Beijing, 100085 (CN); MA, Kexin, Beijing, 100085 (CN); WANG, Wenhao, Beijing, 100085 (CN)
(74) Representative: Nederlandsch Octrooibureau

(57) **Abstract**

The present disclosure provides a method and apparatus for determining a sign meaning, an electronic device, a storage medium and a computer program product, relates to the field of computer technology and specifically to the fields of image recognition and artificial intelligence technologies, and can be applied in sign meaning recognition scenarios. A specification implementation comprises: determining whether a target image contains a sign object; and determining a meaning represented by the sign object in response to determining that the target image contains the sign object. According to the present disclosure, the meaning represented by the sign object is automatically determined, such that the efficiency in acquiring the sign data and the efficiency in determining the sign meaning are improved based on the sign efficiently represented by a user through the target image.

## Description

### TECHNICAL FIELD

The present disclosure relates to the field of computer technology, specifically to the fields of image recognition and artificial intelligence technologies, and particularly to a method and apparatus for determining a sign meaning, an electronic device, a storage medium and a computer program product, and can be applied in sign meaning recognition scenarios.

### BACKGROUND

People encounter various signs in their daily lives, for example, a wet cleaning sign and a traffic sign. When encountering an unfamiliar sign, people will have a query need for the meaning of the sign. However, the products currently on the market do not support the sign recognition function.

### SUMMARY

Embodiments of the present disclosure provide a method and apparatus for determining a sign meaning, an electronic device, a storage medium and a computer program product.

In a first aspect, embodiments of the present disclosure provide a method for determining a sign meaning, comprising: determining whether a target image contains a sign object; and determining a meaning represented by the sign object in response to determining that the target image contains the sign object.

In a second aspect, embodiments of the present disclosure provide an apparatus for determining a sign meaning, comprising: a sign determining unit, configured to determine whether a target image contains a sign object; and a meaning determining unit, configured to determine a meaning represented by the sign object in response to determining that the target image contains the sign object.

In a third aspect, embodiments of the present disclosure provide an electronic device, comprising: one or more processors; and a memory, storing one or more programs, wherein the one or more programs, when executed by the one or more processors, cause the one or more processors to implement the method provided by the first aspect.

In a fourth aspect, embodiments of the present disclosure provide a computer-readable medium, storing a computer program thereon, wherein the program, when executed by a processor, causes the processor to implement the method provided by the first aspect.

In a fifth aspect, an embodiment of the present disclosure provides a computer program product, comprising a computer program, wherein the computer program, when executed by a processor, implements the method provided by the first aspect.

According to the technique of the present disclosure, a method and apparatus for determining a sign meaning are provided. Accordingly, it is possible to automatically recognize whether the target image contains the sign object, and automatically determine the meaning represented by the sign object in the situation where the target image contains a target object, such that the efficiency in acquiring the sign data and the efficiency in determining the sign meaning are improved based on the sign efficiently represented by a user through the target image.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings are used for a better understanding of the scheme, and do not constitute a limitation to the present disclosure. Here:
Fig. 1 illustrates an exemplary system architecture in which an embodiment according to the present disclosure may be applied;
Fig. 2 is a flowchart of an embodiment of a method for determining a sign meaning according to the present disclosure;
Fig. 3 is a schematic diagram of a plurality of sub-sign objects under a wet cleaning sign;
Fig. 4 is a schematic diagram of an application scenario of the method for determining a sign meaning according to this embodiment;
Fig. 5 is a flowchart of another embodiment of the method for determining a sign meaning according to the present disclosure;
Fig. 6 is a structural diagram of an embodiment of an apparatus for determining a sign meaning according to the present disclosure; and
Fig. 7 is a schematic structural diagram of a computer system adapted to implement embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

In the technical solution of the present disclosure, the acquisition, storage, use, processing, transmission, provision, disclosure, etc. of the personal information of a user all comply with the provisions of the relevant laws and regulations, and do not violate public order and good customs.

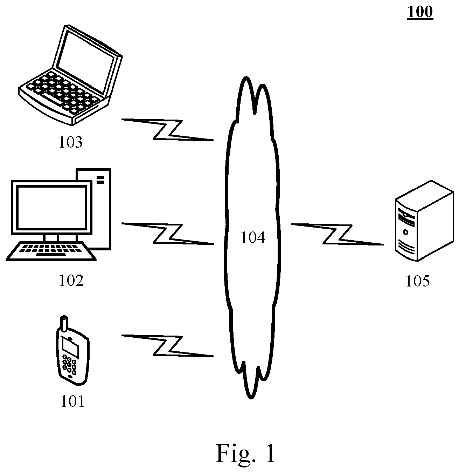

Fig. 1 illustrates an exemplary system architecture 100 in which a method and apparatus for determining a sign meaning according to the present disclosure may be applied.

As shown in Fig. 1, the system architecture 100 may include terminal devices 101, 102 and 103, a network 104 and a server 105. The communication connections among the terminal devices 101, 102 and 103 constitute a topological network. The network 104 serves as a medium providing a communication link between the terminal devices 101, 102 and 103 and the server 105. The network 104 may include various types of connections, for example, wired or wireless communication links, or optical fiber cables.

The terminal devices 101, 102 and 103 may be hardware devices or software supporting a network connection for data interaction and data processing. When being hardware, the terminal devices 101, 102 and 103 may be various electronic devices supporting a network connection and functions such as information acquisition, interaction, display and processing functions, the electronic devices including, but not limited to, a smartphone, a tablet computer, an e-book reader, a laptop portable computer, a desktop computer, and the like. When being the software, the terminal devices 101, 102 and 103 may be installed in the above electronic devices. The terminal devices may be implemented as a plurality of pieces of software or a plurality of software modules (e.g., software or software modules for providing a distributed service), or may be implemented as a single piece of software or a single software module, which will not be specifically limited here.

The server 105 may be a server providing various services. For example, the server 105 may be a backend processing server that determines, through a target image uploaded by the terminal devices 101, 102 and 103, the meaning of a sign object contained in the target image. As an example, the server 105 may be a cloud server.

It should be noted that the server may be hardware or software. When being the hardware, the server may be implemented as a distributed server cluster composed of a plurality of servers, or may be implemented as a single server. When being the software, the server may be implemented as a plurality of pieces of software or a plurality of software modules (e.g., software or software modules for providing a distributed service), or may be implemented as a single piece of software or a single software module, which will not be specifically limited here.

It should also be noted that the method for determining a sign meaning provided in the embodiments of the present disclosure may be performed by the server, by the terminal devices, or by the server and the terminal devices that are in collaboration with each other. Correspondingly, the parts (e.g., the units) included in the apparatus for determining a sign meaning may be all provided in the server, all provided in the terminal devices, or separately provided in the server and the terminal devices.

It should be appreciated that the numbers of the terminal devices, the networks and the servers in Fig. 1 are merely illustrative. Any number of terminal devices, networks and servers may be provided based on actual requirements. When an electronic device on which the method for determining a sign meaning runs does not need to perform data transmission with other electronic devices, the system architecture may only include the electronic device (e.g., a server or a terminal device) on which the method for determining a sign meaning runs.

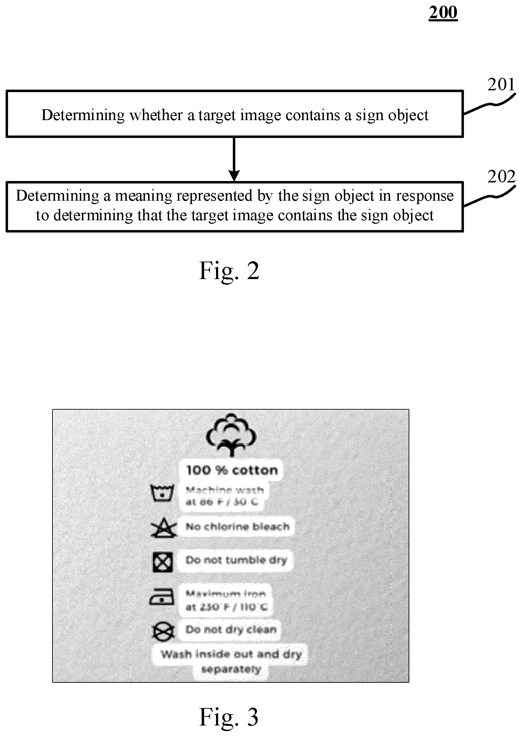

Referring to Fig. 2, Fig. 2 is a flowchart of a method for determining a sign meaning provided by an embodiment of the present disclosure. Here, the process 200 includes the following steps:
Step 201, determining whether a target image contains a sign object.

In this embodiment, an executing body (e.g., the server in Fig. 1) of the method for determining a sign meaning may acquire, by means of a wired network connection or wireless network connection, the target image remotely or locally, and determine whether the target image contains the sign object.

The sign represented by the sign object may be either a sign in the narrow sense or a sign in the broad sense. In the narrow sense, the sign refers to, for example, various kinds of signs such as a wet cleaning sign, a traffic sign, a danger sign and an electric power sign commonly used in life. In the broad sense, the sign refers to, for example, a brand sign or a sign such as a flower.

As an example, the above executing body may determine whether the target image contains the sign object through a pre-trained sign object detection model. Here, the sign object detection model is used to perform an operation of classifying the target image as containing the sign object and not containing the sign object.

The sign object detection model may be either a single-stage object detection model or a two-stage object detection model. In the single-stage object detection model, features are first extracted from an inputted image through a convolutional neural network (CNN). Then, these features are transferred to a prediction head to predict the target bounding box at each position and the category confidence level of the target bounding box. Finally, a technique such as non-maximum suppression (NMS) is used to merge overlapping bounding boxes for filtering to obtain a final detection result. For example, the single-stage object detection model is a model such as an SSD (Single Shot Multibox Detector), YOLO (You Only Look Once), and a RetinaNet (Retina Network).

In the two-stage object detection model, first, features are extracted through a convolutional neural network, and a series of candidate regions are generated using a region proposal network (RPN). Next, these candidate regions are converted into feature maps having a fixed size, and an object classification and precise positioning are performed on each of the candidate regions through a classifier and a regressor. Then, for a Mask R-CNN (Mask Region-based Convolutional Neural Network), a branch for predicting each object instance mask may be added on the basis of the above process. Finally, a technique such as the non-maximum suppression (NMS) is used to merge overlapping bounding boxes to obtain a final detection result. For example, the two-stage object detection model is a model such as a Faster R-CNN (Faster Region-based Convolutional Neural Network), an R-CNN (Region-based Convolutional Neural Network) and the Mask R-CNN.

Step 202, determining a meaning represented by the sign object in response to determining that the target image contains the sign object.

In this embodiment, in response to determining that the target image contains the sign object, the above executing body may determine the meaning represented by the sign object.

As an example, in response to determining that the target image contains the sign object, the above executing body may determine, through a sign recognition model, which sign object the sign object is specifically, that is, the target type information of the sign object, and then determine the meaning corresponding to the target type information in a sign meaning table as the meaning represented by the sign object.

The sign meaning table includes a variety of signs and meaning information corresponding to the signs, and may be generated based on data statistics and collation.

As another example, the above executing body may determine, through a pre-trained meaning determination model, the meaning represented by the sign object. Here, the meaning determination model is used to represent a corresponding relationship between a target image and the meaning of a sign object in the target image.

In some alternative implementations of this embodiment, the above executing body may perform the above step 202 through the following steps:
In a first step, a category to which the sign object belongs is determined in response to determining that the target image contains the sign object.

In this implementation, a sign may be divided based on a conventional classification criterion, or based on a classification criterion preset according to an actual situation. For example, based on the conventional classification criterion, the sign object may be divided into categories such as the wet cleaning sign, the traffic sign, the danger sign and the electric power sign.

As an example, in response to determining that the target image contains the sign object, the above executing body may perform a feature extraction on the target image to obtain feature data; calculating a similarity between the feature data and each category feature in a category feature set; and using a category corresponding to a category feature corresponding to a maximum similarity as the category to which the sign object belongs. Here, each category feature in the category feature set represents one category, respectively.

In a second step, a plurality of sub-sign objects under the category contained in the target image are determined.

The target image often contains various types of sub-sign objects under the same category. Further referring to Fig. 3, a plurality of sub-**sign objects such as "Do not** ble**ach" and "Do not wet clean" under** a category (a wet cleaning sign) are shown.

As an example, the above executing body performs a segmentation on each sub-sign object in the target image to obtain a sub-sign object image; performs a feature extraction on each sub-sign object image to obtain sub-sign feature data; calculating a similarity between each piece of sub-sign feature data and each sub-sign object standard feature in a sub-sign feature set corresponding to the above category; and determines a sub-sign object to which a sub-sign object standard feature corresponding to a maximum similarity belongs as the plurality of sub-sign objects contained in the target image.

Here, the sub-sign feature set corresponding to the category includes the sub-sign object standard feature of each sub-sign object under the category.

As another example, the above executing body may input the target image into the sign recognition model to determine the plurality of sub-sign objects under the category contained in the target image. Here, the sign recognition model is, for example, the above single-stage object detection model or the above two-stage object detection model.

In a third step, a meaning respectively represented by the plurality of sub-sign objects is determined.

For each sub-sign object in the plurality of sub-sign objects, the above executing body may determine the meaning of the sub-sign object based on the combination of the above sign recognition model and the above sign meaning table, or may determine the meaning represented by the sub-sign object based on the above meaning determination model.

In this implementation, the meanings of the various types of sub-sign objects under the same category can be determined simultaneously, thereby improving the accuracy of the sign meaning determination process and the information acquisition efficiency of the user.

In some alternative implementations of this embodiment, the above executing body may perform the third step by: determining, for each sub-sign object in the plurality of sub-sign objects, the meaning represented by the sub-sign object according to a quantity of the sub-sign object in the target image.

For example, the sign object is a flower. In this case, the meanings (flower languages) of different types and quantities of flowers are different.

In this embodiment, for each sub-sign object in the plurality of sub-sign objects, the above executing body first determines the quantity of the sub-sign object in the target image; and then, determines the meaning represented by the sub-sign object based on the type and quantity corresponding to the sub-sign object.

In this embodiment, the meaning represented by the sub-sign object is determined according to the type and quantity corresponding to the sub-sign object, which improves the accuracy of the determined meaning.

The sign object is still the flower. The same type of flower may have different meanings in different geographical areas, under different religious beliefs, and under different backgrounds. In order to further improve the accuracy of the determined meaning, the above executing body may further acquire geographical location information, religious belief information, background information, and the like of the user, so as to determine the meaning represented by each sub-sign object in combination with the above information.

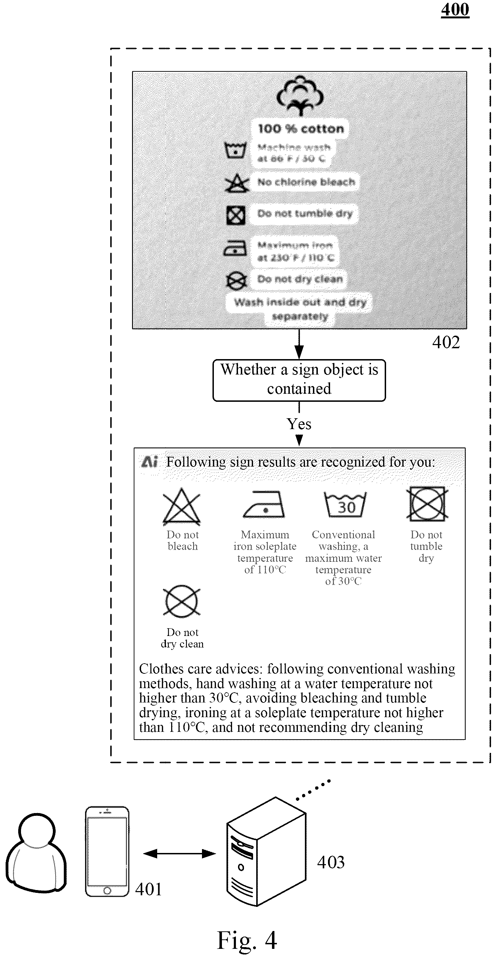

Further referring to Fig. 4, Fig. 4 is a schematic diagram 400 of an application scenario of the method for determining a sign meaning according to this embodiment. In the application scenario of Fig. 4, a user uses a terminal device 401 to take a picture of a wet cleaning sign on clothes, thus obtaining a target image 402, and uploads the target image 402 to a server 403. The server 403 first determines whether the target image contains a sign object. Then, the server 403 determines, in response to determining that the target image contains the sign object, the meaning represented by the sign object, and returns the meaning to the terminal device.

In this embodiment, a method for determining a sign meaning is provided. According to the method, it is possible to automatically recognize whether the target image contains the sign object, and automatically determine the meaning represented by the sign object in the situation where the target image contains a target object, such that the efficiency in acquiring the sign data and the efficiency in determining the sign meaning are improved based on the sign efficiently represented by the user through the target image.

In some alternative implementations of this embodiment, the above executing body may further perform an operation of: displaying the plurality of sub-sign objects and a plurality of meanings corresponding to the plurality of sign objects on a one-to-one basis.

In this implementation, the above executing body may adopt a preset display approach to display the plurality of sub-sign objects and the plurality of meanings corresponding to the plurality of sign objects on a one-to-one basis.

Here, the preset display approach may be specifically set according to actual situations, for example, an approach of displaying a one-to-one correspondence between a plurality of sign objects and a plurality of meanings.

In this implementation, based on the plurality of displayed sub-sign objects and the plurality of displayed meanings, the user can quickly determine the meaning of each sub-sign object, thereby improving the information acquisition efficiency of the user.

In some alternative implementations of this embodiment, the above executing body may perform the above display process through the following steps:
In a first step, a plurality of sub-sign object images corresponding to the plurality of sub-sign objects on a one-to-one basis are recalled.

As an example, the above executing body or the electronic device in communication with the above execution body is provided with a sign image set. The sign image set includes standard images of various signs.

The above executing body may recall, from the sign image set, the plurality of sub-sign object images corresponding to the plurality of sub-sign objects on the one-to-one basis.

In a second step, the plurality of sub-sign object images and the plurality of meanings are displayed in an image-text contrast form.

**In this implementation, the "image" in the image**-text contrast refers to a sub-**sign object image, and the "text" refers to a meaning. Through the image**-text contrast, the effect of displaying the plurality of sub-sign object images and the plurality of meanings is improved, which helps to further improve the efficiency in acquiring information by the user.

In some alternative implementations of this embodiment, the above executing body may perform the first step as follows:
First, for each sub-sign object in the plurality of sub-sign objects, a sub-sign object image corresponding to the sub-sign object is recalled from a preset sign image set in response to determining that the preset sign image set contains the sub-sign object image.

As an example, for each sub-sign object in the plurality of sub-sign objects, the above executing body may calculate a similarity between the feature data of the sub-sign object and the feature data of each sub-sign object image in the preset sign image set; determine, in response to a maximum similarity being greater than a preset similarity threshold, a sub-sign object image corresponding to the maximum similarity as the sub-sign object image corresponding to the sub-sign object for recalling; and determine that the preset sign image set does not contain the sub-sign object image corresponding to the sub-sign object, in response to the maximum similarity being not greater than the preset similarity threshold.

Then, in response to determining that the preset sign image set does not contain the sub-sign object image corresponding to the sub-sign object, the sub-sign object image corresponding to the sub-sign object is recalled from a network image resource.

The network has massive image data and abundant resources. When it is determined that the preset sign image set does not contain the sub-sign object image corresponding to the sub-sign object, the sub-sign object image corresponding to the sub-sign object may be recalled from the network image resource through the similarity-based recalling approach.

In this implementation, the approach of recalling the sub-sign object image is provided. Through the combination of the preset sign image set and the network image resource, the accuracy of the determined sub-sign object image is improved.

In some alternative implementations of this embodiment, the above executing body may perform the operation of generating and displaying, through a pre-trained artificial intelligence large model, summative data for the sign object according to the plurality of sub-sign objects and the plurality of meanings corresponding to the plurality of sub-sign objects on the one-to-one basis as follows.

The large model (artificial intelligence large model) specifically refers to an artificial intelligence pre-trained large model, having a large or ultra-large scale of parameters. the artificial intelligence large model includes two meanings: one is "pre-trai**ning" and the other is** "large model." Through the combination of the two meanings, a new artificial intelligence model is produced. That is, the model completing the pre-training based on a large scale of data sets can directly support various applications without fine-tuning or with only a small amount of data fine-tuned. The artificial intelligence large model has an excellent contextual understanding capability, an excellent language generation capability, an excellent learning capability and excellent transferability.

For example, the sign object is a wet cleaning sign. Through the artificial intelligence large model, the above executing body may generate the summative data for indicating a cleaning process for clothes to the user, according to the plurality of sub-sign objects and the plurality of meanings corresponding to the plurality of sub-sign objects on the one-to-one basis.

For example, the sign object is a traffic sign. Through the artificial intelligence large model, the above executing body may generate the summative data for indicating a driving course in the area corresponding to the sign object to the user, according to the plurality of sub-sign objects and the plurality of meanings corresponding to the plurality of sub-sign objects on the one-to-one basis.

In this implementation, when the meaning of each sub-sign object is displayed to the user, the summative data is also displayed to the user. On the basis that the primary **need of the user for "what" the sign "is" is satisfied, the secondary need of the user** for **"reminder content" is further satisfied, further improving** the information acquisition efficiency and the experience degree of the user.

In some alternative implementations of this embodiment, the above executing body may perform the process of generating the summative data as follows:
First, a prompt word of the artificial intelligence large model is determined according to a scenario represented by the sign object.

In this implementation, for each scenario, a prompt word corresponding to the scenario may be preset. For example, for the wet cleaning sign, the prompt language is "Give me the washing and care advices for clothes according to the wet cleaning sign xxx, and summarize it in one sentence." For a bouquet sign, the prompt language is "Tell me the quantity, name and corresponding meaning of xxx."

After the scenario represented by the sign object is determined, the prompt word of the artificial intelligence large model in the scenario can be determined.

Then, through the artificial intelligence large model, the summative data is generated and displayed according to the prompt word, the plurality of sub-sign objects and the plurality of meanings.

Taking the prompt language corresponding to the above wet cleaning sign as an example, the generated summative data is, for example:
clothes care advices: following conventional washing methods, hand washing **at a water temperature not higher than 30°C, avoiding bleaching and tumble drying,** ironing at a soleplate temperature **not higher than 110°C,** and not recommending dry cleaning.

In this implementation, different prompt words are provided for different scenarios, such that the large model generates and displays the summative data according to the plurality of sub-sign objects and the plurality of meanings, thereby further improving the adaptability of the generated summative data to the scenarios.

In some alternative implementations of this embodiment, the above executing body may perform the following operations:
First, an other object in the target image is determined in response to determining that the target image does not contain the sign object.

The other object includes, but not limited to:
a to-be-translated text in the field of translation;
a to-be-monitored person or vehicle or other objects in the field of intelligent monitoring and security;
a pedestrian, a vehicle, an obstacle, and the like in the field of autonomous driving;
a lesion and a tumor in the field of medical image analysis;
a vehicle, a person, a building, and the like in the field of unmanned aerial vehicle aerial photography; and
a crop growth condition, a disease and pest area, and the like in the field of agricultural and environmental monitoring.

The other object and processed data for the other object are then displayed in a double-column form.

For the above other object, the target image may be processed using a processing approach which the other object is for, to obtain the processed data. The other object and the processed data for the other object are displayed in the double-column form.

In this implementation, when the target image does not contain the sign object, the other object in the target image is further determined, and the processed data of the other object is displayed, thereby improving the comprehensiveness of the processing for the target image.

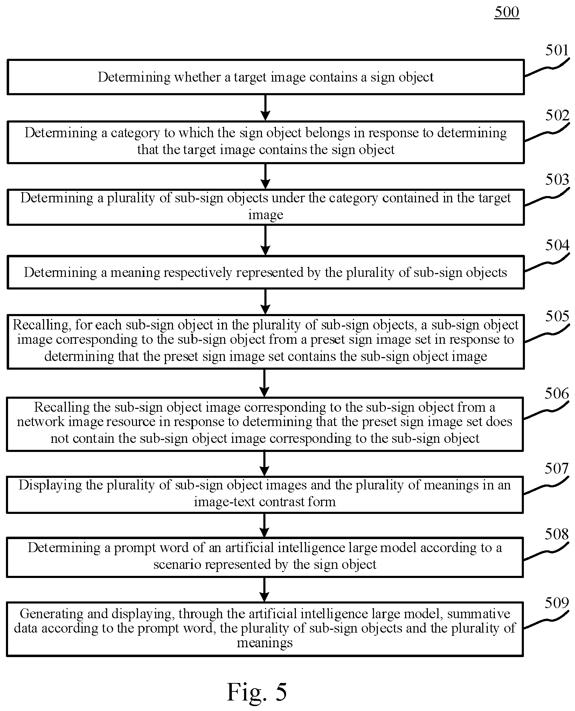

Further referring to Fig. 5, Fig. 5 illustrates a schematic process 500 of another embodiment of the method for determining a sign meaning according to the present disclosure. The process 500 includes the following steps:
Step 501, determining whether a target image contains a sign object.
Step 502, determining a category to which the sign object belongs in response to determining that the target image contains the sign object.
Step 503, determining a plurality of sub-sign objects under the category contained in the target image.
Step 504, determining a meaning respectively represented by the plurality of sub-sign objects.
Step 505, recalling, for each sub-sign object in the plurality of sub-sign objects, a sub-sign object image corresponding to the sub-sign object from a preset sign image set in response to determining that the preset sign image set contains the sub-sign object image.
Step 506, recalling the sub-sign object image corresponding to the sub-sign object from a network image resource in response to determining that the preset sign image set does not contain the sub-sign object image corresponding to the sub-sign obj ect.
Step 507, displaying the plurality of sub-sign object images and the plurality of meanings in an image-text contrast form.
Step 508, determining a prompt word of a artificial intelligence large model according to a scenario represented by the sign object.
Step 509, generating and displaying, through the artificial intelligence large model, summative data according to the prompt word, the plurality of sub-sign objects and the plurality of meanings.

It can be seen from this embodiment that, as compared with the embodiment corresponding to Fig. 2, the process 500 of the method for determining a sign meaning in this embodiment specifically describes the process of determining the sign meaning and the process of generating the summative data, further improving the information acquisition efficiency and the experience degree of the user.

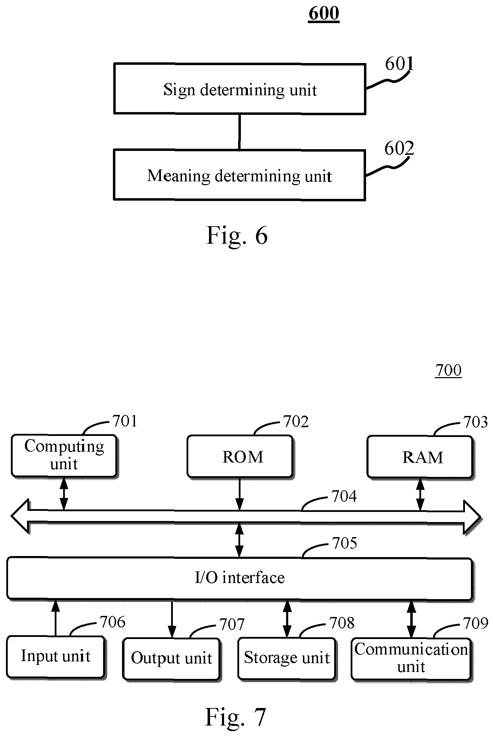

Further referring to Fig. 6, as an implementation of the method shown in the above drawings, the present disclosure provides an embodiment of an apparatus for determining a sign meaning. The embodiment of the apparatus corresponds to the embodiment of the method shown in Fig. 2, and the apparatus may be applied in various electronic devices.

As shown in Fig. 6, an apparatus 600 for determining a sign meaning includes: a sign determining unit 601, configured to determine whether a target image contains a sign object; and a meaning determining unit 602, configured to determine a meaning represented by the sign object in response to determining that the target image contains the sign object.

In some alternative implementations of this embodiment, the meaning determining unit 602 is further configured to: determine a category to which the sign object belongs in response to determining that the target image contains the sign object; determine a plurality of sub-sign objects under the category contained in the target image; and determine a meaning respectively represented by the plurality of sub-sign obj ects.

In some alternative implementations of this embodiment, the meaning determining unit 602 is further configured to: determine, for each sub-sign object in the r plurality of sub-sign objects, a meaning represented by the sub-sign object according to a quantity of the sub-sign object in the target image.

In some alternative implementations of this embodiment, the apparatus further includes: a displaying unit (not shown), configured to display the plurality of sub-sign objects and a plurality of meanings corresponding to the plurality of sign objects on a one-to-one basis.

In some alternative implementations of this embodiment, the displaying unit is further configured to: recall a plurality of sub-sign object images corresponding to the plurality of sub-sign objects on the one-to-one basis; and display the plurality of sub-sign object images and the plurality of meanings in an image-text contrast form.

In some alternative implementations of this embodiment, the displaying unit is further configured to: recall, for each sub-sign object in the plurality of sub-sign objects, a sub-sign object image corresponding to the sub-sign object from a preset sign image set in response to determining that the preset sign image set contains the sub-sign object image; and recall the sub-sign object image corresponding to the sub-sign object from a network image resource in response to determining that the preset sign image set does not contain the sub-sign object image corresponding to the sub-sign object.

In some alternative implementations of this embodiment, the apparatus further includes: a generating unit (not shown), configured to generate and display, through a pre-trained artificial intelligence large model, summative data for the sign object according to the plurality of sub-sign objects and the plurality of meanings corresponding to the plurality of sub-sign objects on the one-to-one basis.

In some alternative implementations of this embodiment, the generating unit is further configured to: determine a prompt word of the artificial intelligence large model according to a scenario represented by the sign object; and generate and display, through the artificial intelligence large model, the summative data according to the prompt word, the plurality of sub-sign objects and the plurality of meanings.

In some alternative implementations of this embodiment, the apparatus further includes: an object determining unit (not shown), configured to determine an other object in the target image, in response to determining that the target image does not contain the sign object; and a data displaying unit (not shown), configured to display the other object and processed data for the other object in a double-column form.

In this embodiment, an apparatus for determining a sign meaning is provided. According to the apparatus, it is possible to automatically recognize whether the target image contains the sign object, and automatically determine the meaning represented by the sign object in the situation where the target image contains a target object, such that the efficiency in acquiring the sign data and the efficiency in determining the sign meaning are improved based on the sign efficiently represented by the user through the target image.

According to an embodiment of the present disclosure, the present disclosure further provides an electronic device. The electronic device includes: at least one processor; and a memory, in communication with the at least one processor. Here, the memory stores instructions executable by the at least one processor, and the instructions are executed by the at least one processor, to enable the at least one processor to implement the method for determining a sign meaning described in any of the above embodiments.

According to an embodiment of the present disclosure, the present disclosure further provides a readable storage medium, storing a computer instruction. The computer instruction is used to cause a computer to implement the method for determining a sign meaning described in any of the above embodiments.

An embodiment of the present disclosure provides a computer program product. The computer program, when executed by a processor, can implement the method for determining a sign meaning described in any of the above embodiments.

FIG. 7 shows a schematic block diagram of an example electronic device 700 that may be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the device 700 includes a computation unit 701, which may perform various appropriate actions and processing, based on a computer program stored in a read-only memory (ROM) 702 or a computer program loaded from a storage unit 708 into a random access memory (RAM) 703. In the RAM 703, various programs and data required for the operation of the device 700 may also be stored. The computation unit 701, the ROM 702, and the RAM 703 are connected to each other through a bus 704. An input/output (I/O) interface 705 is also connected to the bus 704.

A plurality of components in the device 700 are connected to the I/O interface 705, including: an input unit 706, for example, a keyboard and a mouse; an output unit 707, for example, various types of displays and speakers; the storage unit 708, for example, a disk and an optical disk; and a communication unit 709, for example, a network card, a modem, or a wireless communication transceiver. The communication unit 709 allows the device 700 to exchange information/data with other devices over a computer network such as the Internet and/or various telecommunication networks.

The computation unit 701 may be various general-purpose and/or dedicated processing components having processing and computing capabilities. Some examples of the computation unit 701 include, but are not limited to, central processing unit (CPU), graphics processing unit (GPU), various dedicated artificial intelligence (AI) computing chips, various computation units running machine learning model algorithms, digital signal processors (DSP), and any appropriate processors, controllers, microcontrollers, etc. The computation unit 701 performs the various methods and processes described above, such as the method for determining a sign meaning. For example, in some embodiments, the method for determining a sign meaning may be implemented as a computer software program, which is tangibly included in a machine readable medium, such as the storage unit 708. In some embodiments, part or all of the computer program may be loaded and/or installed on the device 700 via the ROM 702 and/or the communication unit 709. When the computer program is loaded into the RAM 703 and executed by the computation unit 701, one or more steps of the method for determining a sign meaning may be performed. Alternatively, in other embodiments, the computation unit 701 may be configured to perform the method for determining a sign meaning by any other appropriate means (for example, by means of firmware). a

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, specific-purpose computer or other programmable apparatus for determining a sign meaning, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, also known as a cloud computing server or a cloud host, which is a host product in the cloud computing service system, to solve the defects of management difficulty and weak business scalability in traditional physical host and Virtual Private Server (VPS) service. The server may also be a distributed system server, or a server combined with a blockchain.

According to the technical solution of the embodiments of the present disclosure, a method for determining a sign meaning is provided. According to the method, it is possible to automatically recognize whether a target image contains a sign object, and automatically determine the meaning represented by the sign object in the situation where the target image contains a target object, such that the efficiency in acquiring the sign data and the efficiency in determining the sign meaning are improved based on the sign efficiently represented by the user through the target image.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure. ia

## Claims

1. A method for determining a sign meaning, comprising:
determining (201, 501) whether a target image contains a sign object; and
determining (202) a meaning represented by the sign object in response to determining that the target image contains the sign object.

2. The method according to claim 1, wherein the determining (202) a meaning represented by the sign object in response to determining that the target image contains the sign object comprises:
determining (502) a category to which the sign object belongs in response to determining that the target image contains the sign object;
determining (503) a plurality of sub-sign objects under the category contained in the target image; and
determining (504) a meaning respectively represented by the plurality of sub-sign objects.

3. The method according to claim 2, wherein the determining (504) a meaning respectively represented by the plurality of sub-sign objects comprises:
determining, for each sub-sign object in the plurality of sub-sign objects, a meaning represented by the sub-sign object according to a quantity of the sub-sign object in the target image.

4. The method according to claim 2, further comprising:
displaying the plurality of sub-sign objects and a plurality of meanings corresponding to the plurality of sign objects on a one-to-one basis.

5. The method according to claim 4, wherein the displaying the plurality of sub-sign objects and a plurality of meanings corresponding to the plurality of sign objects on a one-to-one basis comprises:
recalling a plurality of sub-sign object images corresponding to the plurality of sub-sign objects on the one-to-one basis; and
displaying (507) the plurality of sub-sign object images and the plurality of meanings in an image-text contrast form.

6. The method according to claim 5, wherein the recalling a plurality of sub-sign object images corresponding to the plurality of sub-sign objects on the one-to-one basis comprises:
Recalling (505), for each sub-sign object in the plurality of sub-sign objects, a sub-sign object image corresponding to the sub-sign object from a preset sign image set in response to determining that the preset sign image set contains the sub-sign object image; and
recalling (506) the sub-sign object image corresponding to the sub-sign object from a network image resource in response to determining that the preset sign image set does not contain the sub-sign object image corresponding to the sub-sign obj ect.

7. The method according to any one of claims 2-6, further comprising:
generating and displaying, through a pre-trained artificial intelligence large model, summative data for the sign object according to the plurality of sub-sign objects and the plurality of meanings corresponding to the plurality of sub-sign objects on the one-to-one basis.

8. The method according to claim 7, wherein the generating and displaying, through a pre-trained artificial intelligence large model, summative data for the sign object according to the plurality of sub-sign objects and the plurality of meanings corresponding to the plurality of sub-sign objects on the one-to-one basis comprises:
determining (508) a prompt word of the artificial intelligence large model according to a scenario represented by the sign object; and
generating and displaying (509), through the artificial intelligence large model, the summative data according to the prompt word, the plurality of sub-sign objects and the plurality of meanings.

9. The method according to any one of claims 1-8, further comprising:
determining an other object in the target image, in response to determining that the target image does not contain the sign object; and
displaying the other object and processed data for the other object in a double-column form.

10. An apparatus for determining a sign meaning, comprising:
a sign determining unit (601), configured to determine whether a target image contains a sign object; and
a meaning determining unit (602), configured to determine a meaning represented by the sign object in response to determining that the target image contains the sign object.

11. The apparatus according to claim 10, wherein the meaning determining unit (602) is further configured to:
determine a category to which the sign object belongs in response to determining that the target image contains the sign object; determine a plurality of sub-sign objects under the category contained in the target image; and determine a meaning respectively represented by the plurality of sub-sign objects.

12. The apparatus according to claim 11, wherein the meaning determining unit (602) is further configured to:
determine, for each sub-sign object in the plurality of sub-sign objects, a meaning represented by the sub-sign object according to a quantity of the sub-sign object in the target image.

13. An electronic device, comprising:
at least one processor; and
a memory, in communication with the at least one processor,
wherein the memory stores instructions executable by the at least one processor, and the instructions are executed by the at least one processor, to enable the at least one processor to perform the method according to any one of claims 1-9.

14. A non-transitory computer readable storage medium, storing a computer instruction, wherein the computer instruction is used to cause a computer to perform the method according to any one of claims 1-9.

15. A computer program product, comprising a computer program, wherein the computer program, when executed by a processor, implements the method according to any one of claims 1-9.
